# EUROPÄISCHE PATENTSCHRIFT

(11) **EP 2 115 025 B1**
(45) Veröffentlichungstag und Bekanntmachung des Hinweises auf die Patenterteilung: **20.04.2011**
(21) Anmeldenummer: 08701142.5
(22) Anmeldetag: 18.01.2008
(51) Int. Cl.: C08G 18/08, C08G 18/40, C08K 5/21

(54) **NANOHARNSTOFF-DISPERSIONEN**
NANOUREA DISPERSIONS
DISPERSIONS DE NANO-URÉES

(30) Priorität: 31.01.2007 DE 102007004769
(43) Veröffentlichungstag der Anmeldung: 11.11.2009
(73) Patentinhaber: Bayer MaterialScience AG, 51368 Leverkusen (DE)
(72) Erfinder: DÖRR, Sebastian, 40597 Düsseldorf (DE); BLUM, Harald, 97840 Hafenlohr (DE)
(86) Internationale Anmeldenummer: PCT/EP2008/000355
(87) Internationale Veröffentlichungsnummer: WO 2008/092574

(56) Entgegenhaltungen:
- EP-A- 0 358 427
- WO-A-2004/099281
- WO-A-2005/063873
- WO-A-2005/111107

## Beschreibung

Die Erfindung betrifft in Dispergiermedien vorliegende Dispersionen von Nanoharnstoffen, ein Verfahren zu deren Herstellung und deren Verwendung.

Die Herstellung von wässrigen Dispersionen, enthaltend quervernetze, nanoskalige Polyharnstoff partikel wird in der WO-A 2005/063873 beschrieben. Dabei werden hydrophile Isocyanate in Gegenwart eines Katalysators in Wasser gegeben, wodurch eine Quervernetzung innerhalb der dispergierten Partikel durch Harnstoff-Bindungen stattfindet. Diese Partikel werden dort als Additive für Kontaktklebstoffe auf Basis von Polychloropren-Dispersionen eingesetzt.

Zur Anwendung in nicht-wässrigen oder wasserunverträglichen Systemen sind die Nanoharnstoff Dispersionen, aufgrund ihres Wassergehaltes von 50 bis 80 Gew.%, nicht geeignet. Übliche Trocknungsmethoden, wie beispielweise das direkte Abdestillieren des Wassers, führen zu einem unlöslichen Feststoff, der sich nicht mehr homogen in eine Dispergiermedium einmischen lässt und daher nicht mehr stabil eingebracht werden kann. Da viele Anwendungen, wie beispielsweise Beschichtungsmittel oder Klebstoffe auf organischer Lösemittelbasis existieren und die Systeme nicht wasserverträglich sind, wäre die Bereitstellung nicht-wässriger Nanoharnstoff Dispersionen wünschenswert.

Aufgabe der vorliegenden Erfindung bestand somit in der Bereitstellung von Nanoharnstoff Dispersionen sowie ein Verfahren zu deren Herstellung.

Es wurde nun gefunden, dass wässrige Dispersionen, die quervernetzte Nanoharnstoff-Partikel enthalten, in ein anderes Dispergiermedium umdispergiert und die Mischung vom Wasser befreit werden kann. Hierbei entstehen neuartige Dispersionen von Nanoharnstoffen.

Gegenstand der vorliegenden Erfindung ist somit eine Nanoharnstoff-Dispersion A), enthaltend quervernetzte Nanoharnstoffpartikel a) und mindestens ein Dispergiermedium B), welches mindestens eine, bevorzugt zwei, gegenüber Isocyanatgruppen reaktive Gruppe(n) aufweist, wobei der Wasser-Anteil, bezogen auf die Dispersion A), 0 bis 5 Gew.% beträgt.

Als Dispersionen im Sinne der vorliegenden Erfindung werden Stoffgemische bezeichnet, die aus fein verteilen Partikeln in einem Dispergiermedium B) bestehen. Diese Gemische zeichnen sich dadurch aus, dass keine Phasenseparation statt findet, sondern die Partikel bei Raumtemperatur stabil in dem Dispergiermedium verteilt sind. Die Partikel bestehen dabei aus Feststoffen; das Dispergiermedium kann bei Raumtemperatur flüssig oder fest sein.

Die mittleren Teilchendurchmesser der dispergierten Nanoharnstoffpartikel a) (bestimmt z.B. durch LKS-Messungen, Messung bei 23°C, Messgerät: Malvern Zetasizer 1000, Malvem Inst. Limited) weisen Größen auf von 5 bis 3000 nm, bevorzugt von 10 bis 1500 nm und besonders bevorzugt von 30 bis 300 nm auf.

Der Wassergehalt der erfindungsgemäßen Dispersion A) beträgt (bestimmt nach dem Karl-Fischer-Verfahren) 0 Gew.% bis 5 Gew.%, bevorzugt 0,002 bis 2 Gew.%, besonders bevorzugt 0,01 bis 1 Gew.% und ganz besonders bevorzugt 0,01 bis 0,2 Gew.-%.

Der Gehalt an Nanoharnstoff Partikeln a) in der erfindungsgemäßen Dispersion A) liegt zwischen 0,1 und 50 Gew.-%, bevorzugt 1 bis 25 Gew.-%.

Die in der erfindungsgemäßen Nanoharnstoff Dispersion A) enthaltenen Nanoharnstoffpartikel a) werden durch Umsetzung hydrophilierter Polyisocyanate i) in einem wässrigen Medium unter Ausbildung einer wässrigen Nanoharnstoff-Dispersion A') erhalten. Dabei sind die Partikel intrapartikulär im Wesentlichen durch Harnstoffbindungen quervernetzt. Die unvernetzen oder vorvernetzen Partikel bilden sich durch Dispergierung der hydrophilierten Polyisocyanate i) in Wasser. Anschließend wird ein Teil der vorhandenen Isocyanatgruppen durch eine Isocyanat-Wasser-Reaktion zum primären oder sekundären Amin abgebaut. Diese Aminogruppen bilden dann durch Abreaktion mit weiteren Isocyanatgruppen Harnstoffgruppen und vernetzten dadurch zu Nanoharnstoffpartikel, die in wässriger Dispersion A') vorliegen. Ein Teil der Isocyanatgruppen kann dabei auch vor oder während der Reaktion mit Wasser oder mit anderen Isocyanat-reaktiven Spezies, wie z.B. primären oder sekundären Aminen und/oder Alkoholen umgesetzt werden.

Als hydrophilierte Polyisocyanate i) können an sich alle dem Fachmann bekannten NCOgruppenhaltigen Verbindungen eingesetzt werden, die nichtionisch oder potentiell ionisch hydrophiliert sind. Werden Mischungen verschiedener Polyisocyanate i) eingesetzt, ist es bevorzugt, dass mindestens ein Polyisocyanat eine nichtionisch hydrophilierende Struktureinheit auf weist. Besonders bevorzugt werden ausschließlich Polyisocyanate i) mit nichtionisch hydrophilierende Gruppen eingesetzt.

Unter ionisch bzw. potentiell ionisch hydrophilierende Verbindungen werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation), -NR₂, - NR₃⁺ (R = H, Alkyl, Aryl), aufweisen, die bei Wechselwirkung mit wässrigen Medien ein pH-Wert-abhängiges Dissoziationsgleichgewicht eingeht und auf diese Weise negativ, positiv oder neutral geladen sein kann. Bevorzugte isocyanatreaktive Gruppen sind Hydroxyl- oder Aminogruppen.

Geeignete ionisch oder potentiell ionisch hydrophilierende Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze, wie Dimethylolpropionsäure, Dimethylolbuttersäure, Hydroxypivalinsäure, N-(2-Aminoethyl)-β-alanin, 2-(2-Amino-ethylamino)-ethansutfonsäure, Ethylendiamin-propyl- oder -butylsulfonsäure, 1,2- oder 1,3-Propylendiamin-ß-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten. Weiterhin kann Cyclohexylaminopropansulfonsäure (CAPS) wie z.B. in der WO-A 01/88006 als Verbindung verwendet werden.

Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierende Verbindungen sind z.B. Polyoxyalkylenether, die mindestens eine Hydroxy- oder Aminogruppe enthalten. Diese Polyether enthalten einen Anteil von 30 Gew.% bis 100 Gew.-% an Bausteinen, die vom Ethylenoxid abgeleitet sind.

Hydrophile Aufbaukomponenten zum Einbau endständiger hydrophiler Ethylenoxideinheiten aufweisender Ketten sind bevorzugt Verbindungen der Formel (I),

H-Y'-X-Y-R (I)

in welcher
- R: für einen einwertigen Kohlenwasserstoffrest mit 1 bis 12 Kohlenstoffatomen, bevorzugt einen unsubstituierten Alkylrest mit 1 bis 4 Kohlenstoffatomen steht,
- X: für eine Polyalkylenoxidkette mit 5 bis 90, bevorzugt 20 bis 70 Kettengliedern, welche zumindest zu 40 %, bevorzugt zumindest zu 65 % aus Ethylenoxid-Einheiten bestehen und die neben Ethylenoxid-Einheiten aus Propylenoxid-, Butylenoxid- oder Styroloxid- Einheiten bestehen können, wobei unter den letztgenannten Einheiten Propylenoxid- Einheiten bevorzugt sind, steht und
- Y'/Y: für Sauerstoff oder auch für -NR'- steht, wobei R' bezüglich seiner Definition R oder Was- serstoff entspricht.

Besonders bevorzugt sind die Mischpolymerisate des Ethylenoxids mit Propylenoxid mit einem Ethylenoxidmassenanteil größer 50 %, besonders bevorzugt von 55 bis 89 %. In einer bevorzugten Ausführungsform werden Verbindungen mit einem Molekulargewicht von mindestens 400 g/mol, bevorzugt von mindestens 500 g/mol und besonders bevorzugt von 1200 bis 4500 g/mol eingesetzt.

Besonders bevorzugt sind nichtionisch hydrophilierte Polyisocyanate i), die im statistischen Mittel 5 bis 70, bevorzugt 7 bis 55 Oxyethylengruppen, bevorzugt Ethylengruppen pro Molekül aufweisen.

Die hydrophilierten Polyisocyanate i) basieren auf die dem Fachmann an sich bekannten aliphatischen, cycloaliphatischen, araliphatischen und aromatischen Polyisocyanaten mit mehr als einer NCO-Gruppe pro Molekül und einem Isocyanatgehalt von 0,5 bis 50 Gew.%, bevorzugt 3 bis 30 Gew.%, besonders bevorzugt 5 bis 25 Gew.-% oder deren Gemische.

Beispiele geeigneter Polyisocyanate sind Butylendiisocyanat, Tetramethylendiisocyanat, Cyclohexan-1,3- und 1,4-diisocyanat, Hexamethylendiisocyanat (HDI), 1-Isocyanato-3,3,5-trimethyl-5-isocyanato-methylcyclohexan (Isophorondiisocyanat, IPDI), 2,4,4-Trimethylhexamethylendiisocyanat, Isocyanatomethyl-1,8-octandiisocyanat, Methylen-bis-(4-isocyanatocyclohexan), Tetramethylxylylendiisocyanat (TMXDI) oder Triisocyanatononan (TIN, 4-Isocyanatomethyl-1,8-octandiisocyanat) sowie deren Mischungen. Prinzipiell geeignet sind auch aromatische Polyisocyanate wie 1,4-Phenylendiisocyanat, 2,4- und/oder 2,6-Toluylendiisocyanat (TDI), Diphenylmethan-2,4-und/oder 4,4'-diisocyanat (MDI), Triphenylmethan-4,4'-diisocyanat oder Naphthylen-1,5-diisocyanat.

Neben den vorstehend genannten Polyisocyanaten können auch höhermolekulare Folgeprodukte mit Uretdion-, Isocyanurat-, Urethan-, Allophanat-, Biuret-, Iminooxadiazindion- und/oder Oxadiazintrionstruktur eingesetzt werden. Solche Folgeprodukte sind in an sich bekannter Weise aus den monomeren Diisocyanaten durch die im Stand der Technik beschriebene Modifizierungsreaktionen bekannt.

Bevorzugt liegen den hydrophilierten Polyisocyanaten i) Polyisocyanate oder Polyisocyanatgemische der vorstehend genannten Art mit ausschließlich aliphatisch oder cycloaliphatisch gebundenen Isocyanatgruppen oder deren beliebige Mischungen zugrunde.

Besonders bevorzugt basieren die hydrophilierten Polyisocyanate auf Hexamethylendiisocyanat, Isophorondiisocyanat oder die isomeren Bis-(4,4'-isocyanatocyclohexyl)methane sowie Mischungen der vorgenannten Diisocyanate. B evorzugt enthalten die Polyisocyanate i) mindestens 50 Gew.% Polyisocyanate auf Basis von Hexamethylendiisocyanat

Die Dispergierung der Nanoharnstoffpartikel a) in Wasser und Reaktion mit Wasser zur Herstellung der wässrigen Dispersion A') erfolgt bevorzugt unter Durchmischung durch ein Rührwerk oder andere Arten der Durchmischung wie Umpumpen, Statikmischer, Stachelmischer, Düsenstrahldispergator, Rotor und Stator oder unter Einfluss von Ultraschall.

Grundsätzlich kann während oder nach der Dispergierung noch eine Modifizierung von NCO-Gruppen mit isocyanatreaktiven Verbindungen wie primären oder sekundären Aminen oder (Poly)Alkoholen erfolgen. Beispiele sind Ethylendiamin, 1,3-Propylendiamin, 1,6-Hexamethylendiamin, Isophorondiamin, 4,4'-Diaminodicyclohexylmethan, Hydrazin, 1,4-Butandiol, 1,4-Cyclohexandimethanol, 1,6-Hexandiol, Trimethylolethan, Trimethylolpropan, Glycerin, N-Methylethanol- und N-Methylisopropanolamin, 1-Amino-propanol oder Diethanolamin.

Bevorzugt beträgt das molekulare Verhältnis von NCO-Gruppen des hydrophilierten Polyisocyanats i) zu Wasser 1 zu 100 bis 1 zu 5, besonders bevorzugt 1 zu 30 bis 1 zu 10.

Grundsätzlich ist es möglich das hydrophilierte Polyisocyanat i) in einer Portion in das Wasser einzudispergieren. Ebenfalls ist eine kontinuierliche Zugabe des hydrophilierten Polyisocyanates, beispielsweise über einen Zeitraum von 30 Minuten bis 20 Stunden möglich. Bevorzugt ist eine portionsweise Zugabe, wobei die Anzahl der Portionen 2 bis 50, bevorzugt 3 bis 20, besonders bevorzugt 4 bis 10 beträgt, und die Portionen gleich oder auch unterschiedlich groß sein können.

Die Wartezeit zwischen den einzelnen Portionen beträgt typischerweise 5 Minuten bis 12 Stunden, bevorzugt 10 Minuten bis 8 Stunden, besonders bevorzugt 30 Minuten bis 5 Stunden.

Ebenfalls möglich ist eine über einen Zeitraum von 1 Stunde bis 24 Stunden, bevorzugt 2 Stunden bis 15 Stunden verteilte kontinuierliche Zugabe des hydrophilierten Polyisocyanats i).

Bei der Harnstoffpartikelherstellung beträgt die Kesseltemperatur 10 bis 80°C, bevorzugt 20 bis 70°C und besonders bevorzugt 25 bis 50°C.

Bevorzugt wird im Anschluss an die Umsetzung des hydrophilierten Polyisocyanats i) mit Wasser der Reaktor bei Innentemperaturen von 0°C bis 80°C, bevorzugt 20°C bis 60°C und besonders bevorzugt 25°C bis 50°C evakuiert. Die Evakuierung erfolgt bis zu einen Innendruck von 1 bis 900 mbar, bevorzugt 10 bis 800 mbar, besonders bevorzugt 100 bis 400 mbar. Die Dauer dieser sich an die eigentliche Reaktion anschließenden Entgasung beträgt 1 Minute bis 24 Stunden, bevorzugt 10 Minuten bis 8 Stunden. Eine Entgasung ist auch durch Temperaturerhöhung ohne Evakuierung möglich.

Bevorzugt wird gleichzeitig mit der Evakuierung die Nanoharnstoff-Dispersion A') durchmischt, z.B. durch Rühren.

Die Herstellung der wässrigen Dispersionen A') erfolgt bevorzugt in Anwesenheit von Katalysatoren.

Die zur Herstellung der Nanoharnstoff-Dispersionen A') eingesetzten Katalysatoren sind beispielsweise tertiäre Amine, Zinn-, Zink- oder Wismuthverbindungen oder basische Salze.

Geeignete Katalysatoren sind z.B. Eisen(11)-chlorid, Zinkchlorid, Zinnsalze, Tetraalkylammoniumhydroxide, Alkalihydroxide, Alkalialkoholate, Alkalisalze von langkettigen Fettsäuren mit 10 bis 20 Kohlenstoffatomen und gegebenenfalls seitenständigen OH-Gruppen, Bleioctoat oder tertiäre Amine wie Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)harnstoff, N-Methyl- bzw. N-Ethylmorpholin, N,N'-Dimorpholinodiethylether (DMDEE), N-Cyclohexylmorpholin, N,N,N',N'-Tetramethylethylendiamin, N,N,N',N'-Tetramethylbutandiamin, N,N,N',N'-Tetramethylhexandiamin- 1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2, 2,0)-octan, 1,4-Diazabicyclo-(2,2,2)-octan (Dabco) oder Alkanolaminverbindungen, wie Triethanolamin, Triisopropanolamin, N-Methyl- und N-Ethyl-diethanolamin, Dimethyl-aminoethanol, 2-(N,N-Dimethylaminoethoxy)ethanol oder N-Tris-(dialkylaminoalkyl)hexahydrotriazine, z.B. N,N',N-Tris-(dimethylaminopropyl)-s-hexahydrotriazin.

Bevorzugt sind tertiäre Amine wie Tributylamin, Triethylamin, Ethyldiisopropylamin oder 1,4-Diazabicyclo-[2,2,2]-octan. Bevorzute Zinnverbindungen sind Zinndioctoat, Zinndiethylhexoat, Dibutylzinndilaurat oder Dibutyldilaurylzinnmercaptid. Des Weiteren sind bevorzugt 2,3- Dimethyl-3,4,5,6-tetrahydropyrimidin, Tetramethylammoniumhydroxid, Natriumhydroxid, Natriummethylat oder Kaliumisopropylat.

Besonders bevorzugte Katalysatoren sind Triethylamin, Ethyldiisopropylamin oder 1,4-Diazabicyclo-[2,2,2]-octan.

Die Katalysatoren werden in Mengen von 0,01 bis 8 Gew.%, bevorzugt von 0,05 bis 5 Gew.-%, besonders bevorzugt von 0,1 bis 3 Gew.%, bezogen auf den gesamten Festkörpergehalt der resultierenden Dispersion, eingesetzt.

Der Katalysator kann mit dem hydrophilierten Polyisocyanate i) oder mit dem Dispergierwasser gemischt werden oder nach der Dispergierung der Polyisocyanate i) in Wasser zugefügt werden. Bevorzugt ist es, den Katalysator dem Dispergierwasser vor Zusatz des Polyisocyanates i) beizumischen. Es ist auch möglich den Katalysator in Portionen aufzuteilen und zu unterschiedlichen Zeitpunkten des Reaktionsverlaufes hinzuzufügen.

Es ist ebenfalls möglich, Lösemittel wie beispielsweise N-Methylpyrrolidon, N-Ethylpyrrolidon, Methoxypropylacetat, Dimethylsulfoxid, Methyoxypropylacetat, Aceton und/oder Methylethylketon dem hydrophilierten Polyisocyanat i) vor der Dispergierung zuzugeben. Nach Abschluss der Reaktion und Dispergierung können flüchtige Lösemittel wie Aceton und/oder Methylethylketon durch Destillation entfernt werden. Bevorzugt ist die Herstellung ohne Lösemittel oder die Verwendung von Aceton oder Methylethylketon, besonders bevorzugt ist die Herstellung ohne Lösemittel.

Das in den erfindungsgemäßen Dispersionen A) enthaltene Dispergienmedium B) weist mindestens eine, bevorzugt zwei gegenüber Isocyanatgruppen reaktive Gruppe(n) auf.

Geeignete Dispergiermedien B) sind z.B. Diamine, Polyamine, Diole, Polyole oder Verbindungen, die sowohl Alkoholgruppen und primäre bzw. sekundäre Aminogruppen als gegenüber Isocyanatgruppen reaktive Gruppen enthalten.

Beispiele für die beschriebenen Dispergiermedien sind Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole oder Polyesterpolycarbonatpolyole.

Als Dispergiermedium bevorzugt sind Substanzen, die sich mit wässrigen Nanoharnstoff Dispersionen A') vermischen lassen und aus deren Mischung mit der wässrigen Nanoharnstoff Dispersion A') sich das Wasser entfernen lässt, wie z.B. Polyesterpolyole, Polycarbonatpolyole, Polyetherpolyole und kurzkettige Polyole.

Beispiele für geeignete kurzkettige Polyole sind Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Glycerin, Pentaerythrit oder Hydroxypivalinsäureneopentylglykolester. Bevorzugte kurzkettige Polyole sind 1,4- oder 1,3-Butandiol, 1,6-Hexandiol oder Trimethylolpropan.

Beispiele für geeignete monofunktionelle Alkohole sind Ethanol, n-Butanol, n-Propanol, Ethylenglykolmonobutylether (2-Butoxy-ethanol), Diethylenglykolmonomethylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1 Dodecanol, 1-Hexadecanol, Diacetonalkohol, Benzylalkohol, Amylalkohol, Cyclohexanol, Furfurylalkohol o-Kresol, m-Kresol, p-Kresol, und Phenol. Bevorzugte monofunktionelle Alkohole sind Ethylenglykolmonobutylether, Diacetonalkohol, Amylalkohol oder Cyclohexanol.

Beispiele für Di- oder Polyamine sind 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, Triaminononan, 1,3- und 1,4-Xylylendiamin, α,α,α,α'-Tetramethyl-1,3- und -1,4-xylylendiamin und 4,4-Diaminodicyclohexylmethan oder Dimethylethylendiamin. Bevorzugt sind 1,2-Ethylendiamin, 1,6-Diaminohexan oder Isophorondiamin.

Ebenfalls geeignet sind Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie Diethanolamin, 3-Amino-1-methylaminopropan, 3-Amino-1-ethylaminopropan, 3-Amino-1-cyclohexylaminopropan, 3-Amino-1-Methylaminobutan, Alkanolamine wie N-Aminoethylethanolamin, Ethanolamin, 3-Aminopropanol oder Neopentanolamin. Bevorzugt sind Diethanolamin, 3-Amino-1-methylaminopropan oder 3-Aminopropanol.

Als Dispergiermedium B) sind besonders bevorzugt Polyesterpolyole, wie beispielsweise die an sich bekannten Polykondensate aus Di- sowie gegebenenfalls Tri- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat eingesetzt werden. Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbemsteinsäure eingesetzt werden. Als Säurequelle können auch die entsprechenden Anhydride verwendet werden. Sofern die mittlere Funktionalität des zu veresternden Polyols > als 2 ist, können zusätzlich auch Monocarbonsäuren, wie Benzoesäure und Hexancarbonsäure mit verwendet werden. Bevorzugte Säuren sind aliphatische oder aromatische Säuren der vorstehend genannten Art. Besonders bevorzugt sind Adipinsäure, Isophthalsäure und gegebenenfalls Trimellithsäure. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Besonders bevorzugte Polyesterpolyole sind solche auf Basis von Adipinsäure, Phthalsäure, Isophthalsäure und Tetrahydrophthalsäure als Säurekomponente und Ethylenglykol, Diethylenglykol, Triethylenglykol; 1,4- oder 1,3-Butandiol, 1,6-Hexandiol und/oder Trimethylolpropan als Alkoholkomponente.

Ebenfalls bevorzugt als Dispergiermedium B) sind hydroxylgruppenaufweisende Polycarbonate, bevorzugt Polycarbonatdiole, mit zahlenmittleren Molekulargewichten Mₙ von 400 bis 8000 g/mol, bevorzugt 600 bis 3000 g/mol eingesetzt werden. Diese sind durch Reaktion von Kohlensäurederivaten, wie Diphenylcarbonat, Dimethylcarbonat oder Phosgen, mit Polyolen, bevorzugt Diolen, erhältlich. Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A und lactonmodifizierte Diole der vorstehend genannten Art in Frage. Bevorzugt enthält die Diolkomponente 40 bis 100 Gew.% Hexandiol, bevorzugt sind 1,6-Hexandiol und/oder Hexandiolderivate. Solche Hexandiolderivate basieren auf Hexandiol und weisen neben endständigen OH-Gruppen Ester- oder Ethergruppen auf. Solche Derivate sind durch Reaktion von Hexandiol mit Überschüssigem Caprolacton oder durch Veretherung von Hexandiol mit sich selbst zum Di- oder Trihexylenglykol erhältlich. Statt oder zusätzlich zu reinen Polycarbonatdiolen können auch Polyether-Polycarbonatdiole in eingesetzt werden. Hydroxylgruppenaufweisende Polycarbonate sind bevorzugt linear gebaut, können aber auch durch den Einbau polyfunktioneller Komponenten, insbesondere niedermolekularer Polyole, leicht erhalten werden. Hierzu eignen sich beispielsweise Glycerin, Trimethylolpropan, Hexantriol-1,2,6, Butantriol-1,2,4, Trimethylolethan, Pentaerythrit, Chinit, Mannit, Sorbit, Methylglykosid oder 1,3,4,6-Dianhydrohexite. Bevorzugte Polycarbonate werden aus Diphenylcarbonat bzw. Dimethylcarbonat und 1,6-Hexandiol, 1,4-Butandiol und Methyl-1,3-propandiol aufgebaut.

Als Dispergiermedium B) können bevorzugt auch Polyetherpolyole eingesetzt werden. Geeignet sind beispielsweise die in der Polyurethanchemie an sich bekannten Polytetramethylenglykolpolyether wie sie durch Polymerisation von Tetrahydrofuran mittels kationischer Ringöffnung erhältlich sind. Ebenfalls geeignete Polyetherpolyole sind die an sich bekannten Additionsprodukte von Styroloxid, Ethylenoxid, Propylenoxid, Butylenoxide und/oder Epichlorhydrins an di- oder polyfunktionelle Startermoleküle. Als geeignete Startermoleküle können alle dem Stand der Technik nach bekannten Verbindungen eingesetzt werden, wie zum Beispiel Wasser, Butyldiglykol, Glycerin, Diethylenglykol, Trimethylolpropan, Propylenglykol, Sorbit, Ethylendiamin, Triethanolamin, 1,4-Butandiol. Besonders bevorzugt ist der Einsatz von Polyetherpolyolen, die aufgebaut sind aus Ethylenoxid, Propylenoxid und Butylenoxid.

Gegenstand der vorliegenden Erfindung ist auch ein Verfahren zur Herstellung der erfindungsgemäßen Nanoharnstoff-Dispersionen A), dadurch gekennzeichnet, dass in einem ersten Schritt eine wässrige Nanoharnstoff-Dispersion A') enthaltend quervernetzte Nanoharnstoffpartikel a), mit mindestens einem Dispergiermedium B), welches mindestens zwei gegenüber Isocyanatgruppen reaktive Gruppen aufweist, vermischt wird und anschließend in einem zweiten Schritt das Wasser, gleichzeitig zum Mischvorgang oder im Anschluss an die vollständige Durchmischung, entfernt wird.

Die wässrige Nanoharnstoff-Dispersion A') und das Dispergiermedium B) können in beliebiger Reihenfolge vermischt werden, es kann eine Komponente kontinuierlich, portionsweise oder auf einmal zu der anderen Komponente hinzugefügt werden. In einer bevorzugten Verfahrens-Variante werden das Dispergiermedium B) und die wässrige Nanoharnstoff-Dispersion A') zuerst vollständig miteinander vermischt und anschließend wird das Wasser aus der Mischung entfernt.

Prinzipiell ist die Entfernung des Wassers bei Atmosphärendruck, Unterdruck oder Überdruck möglich. In einer besonders bevorzugten Verfahrens-Variante wird das Wasser destillativ entfernt, wobei unter Druckverminderung und/oder unter Temperaturerhöhung gearbeitet wird.

Auch andere Techniken zur Abtrennung von Wasser sind möglich, wie beispielsweise die Entwässerung durch Membranverfahren oder der Einsatz wasserziehender Trockenmittel, wie z.B Silicagel oder Zeolithe. Auch die Kombination verschiedener Entwässerungstechniken, gleichzeitig oder nacheinander, ist möglich. Auch die Abtrennung des Wassers unter Zuhilfenahme von Additiven ist möglich, beispielsweise die Zumischung von Schleppmitteln zur vereinfachten destillativen Entfernung von Wasser.

Im erfindungsgemäßen Verfahren erfolgt die Durchmischung der wässrigen Nanoharnstoff Dispersion A') mit dem nicht-wässrigen Dispergiermedium B) bevorzugt mittels Durchmischung durch ein Rührwerk. Andere Arten der Durchmischung wie z.B. durch Umpumpen, Statikmischer, Schüttler, Rotation eines Gefäßes, Stachelmischer, Düsenstrahldispergator, Rotor und Stator, oder durch Einfluss von Ultraschall sind auch möglich. Die Durchmischung erfolgt bei Temperaturen die zwischen 0°C und 150°C, bevorzugt zwischen 10°C und 120°C und besonders bevorzugt zwischen 20°C und 100°C liegen. Es wird bei Temperaturen gearbeitet, bei denen das Dispergiermedium als Flüssigkeit vorliegt.

Bei Abtrennung des Wassers durch Destillation wird bei Temperaturen zwischen 20°C und 200°C, bevorzugt zwischen 25°C und 150°C und besonders bevorzugt zwischen 40°C und 100°C gearbeitet. Falls die Entfernung des Wasser unter Vakuum erfolgt, liegt der eingestellte Druck in der Regel zwischen 1 und 900 mbar, bevorzugt zwischen 2 und 500 mbar, besonders bevorzugt zwischen 5 und 100 mbar. Auch das Durchlaufen von Temperatur- und/oder Druckprofilen ist möglich. Als Dauer der Entwässerung eignen sich beispielsweise Zeiten zwischen 10 Minuten und 24 Stunden, bevorzugt zwischen 30 Minuten und 16 Stunden. Während der Entfernung des Wassers wird die Mischung bevorzugt weiter durchmischt, beispielsweise durch Rühren und/oder Umpumpen.

In einer bevorzugten Variante des erfindungsgemäßen Verfahrens wird das flüssige oder aufgeschmolzene Dispergiermedium B) in einer Rührapparatur vorgelegt und unter intensivem Rühren die wässrige Nanoharnstoff-Dispersion A') zugetropft, wobei bevorzugte Dosierzeiten eine Minute bis 10 Stunden, bevorzugt 10 Minuten bis 5 Stunden betragen und anschließend eine Stunde bis 10 Stunden nachgerührt wird, danach das Wasser aus der Dispersion durch Destillation entfernt und die Dispersion unter Druckverminderung getrocknet wird.

Bei der Herstellung der erfindungsgemäßen Nanoharnstoff-Dispersion A) können auch Colöser, Entschäumer, oberflächenaktive Detergentien und andere Hilfsmittel und Additive verwendet werden. Werden flüchtige Colösemittel eingesetzt, können diese wieder aus der erfindungsgemäßen Nanoharnstoff Dispersion A) entfernt werden, beispielsweise zusammen mit der Entfernung des Wassers.

Weitere Additive sind beispielsweise Katalysatoren, Stabilisatoren, Lichtschutzmittel, Oxidationsschutzmittel, Biozide, Pigmente und/oder Füllstoffe. Der Zusatz kann vor, während oder nach der Herstellung der erfindungsgemäßen NanoharnstofF Dispersion A) erfolgen.

Die erfindungsgemäßen Nanoharnstoff-Dispersionen A) können als solche beispielsweise als Additiv, Bindemittel oder Hilfs- oder Zusatzstoff verwendet werden.

Gegenstand der vorliegenden Erfindung ist somit auch die Verwendung der erfindungsgemäßen Nanoharnstoff-Dispersionen A) zur Herstellung von Additiven, Bindemittel oder Hilfs- oder Zusatzstoffen.

Gegenstand der vorliegenden Erfindung sind auch Additive, Bindemittel oder Hilfs- oder Zusatzstoffe enthaltend die erfindungsgemäßen Nanoharnstoff-Dispersionen A).

### Beispiele

### Chemikalien

### Bayhydur^{®} VP LS 2336 (Bayer MaterialScience AG, Lev., DE):

Hydrophiliertes Polyisocyanat auf Basis von Hexamethylendiisocyanat, lösemittelfrei, Viskosität ca. 6800 mPa s, Isocyanat-Gehalt ca. 16,2%, Bayer MaterialScience AG, Leverkusen, DE.

### Impranil^{®} DLN (Bayer MaterialScience AG, Lev., DE):

Anionisch hydrophilierte, nicht querverzweigte, aliphatische Polyesterpolyurethan-Dispersion in Wasser mit einem Feststoffgehalt von ca. 40 %, Bayer MaterialScience AG, Leverkusen, DE.

### Bayhydur^{®} VP LS 2240 (Bayer MaterialScience AG, Lev., DE):

Nicht-ionisch hydrophilierte, wässrige Polyisocyanat-Dispersion enthaltend blockierte Isocyanatgruppen, Feststoffgehalt ca. 35%ig in Wasser/MPA/Xylol (56 : 4,5 : 4,5).

### Isofoam^{®} 16 (Petrofer-Chemie, Hildesheim, DE):

### Entschäumer

Die anderen Chemikalien wurden im Feinchemikalienhandel bei Sigma-Aldrich GmbH, Taufkirchen, DE bezogen.

Lagertest: Aufbewahrung einer Probe in einer 1 Liter Polyethylen-Flasche. Sichtprüfung, ob sich ein Niederschlag bildet.

Die Wasserbestimmung erfolgte mittels Karl-Fischer-Titration nach DIN 51777 Teill. Bei Anwesenheit von Aminen wird eine Pufferung mit Benzoesäure durchgeführt.

Sofern nicht abweichend vermerkt, beziehen sich alle Prozentangaben auf Gewichtsprozent.

Sofern nicht abweichend vermerkt, beziehen alle analytischen Messungen auf Temperaturen von 23°C.

Die angegebenen Viskositäten wurden mittels Rotationsviskosimetrie nach DIN 53019 bei 23°C mit einem Rotationsviskosimeter der Firma Anton Paar GermanyGmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgrößen wurden mittels Laserkorrelationsspektroskopie (Gerät: Malvem Zetasizer 1000, Malvem Inst. Limited) bestimmt.

Die Festkörpergehalte wurden ermittelt durch Erhitzen einer ausgewogenen Probe auf 120°C. Bei Gewichtskonstanz wurde durch erneutes Auswiegen der Probe Festkörpergehalt berechnet.

Die Kontrolle auf freie NCO-Gruppen wurde mittels IR-Spektroskopie (Bande bei 2260 cm⁻¹) durchgeführt.

### 1) Herstellung einer wässrigen Nanobarnstoff-Dispersion

Zu einer Lösung von 20,72 g Triethylamin in 4952 g entionisiertem Wasser wurden bei 30°C unter heftigem Rühren 820,20 g Bayhydur^{®} VP LS 2336 und anschließend 0,32 g lsofoam^{®} 16 gegeben und weiter gerührt. Nach 3, 6 und 9 Stunden wurden jeweils weitere 820,20 g Bayhydur^{®} VP LS 2336 und je anschließend 0,32 g Isofoam^{®} 16 zugesetzt und anschließend bei 30°C weitere 4 Stunden nachgerührt. Danach wurde bei 200 mbar Vakuum und 30°C weiter 3 Stunden gerührt und die entstandene Dispersion abgefüllt.

Die erhaltene weiße wässrige Dispersion hatte nachfolgenden Eigenschaften:

| | |
|---|---|
| Partikelgröße (LKS): | 83 nm |
| Viskosität (Viskosimeter, 23°C): | < 50 mPas |
| pH (23°C): | 8,33 |

### 2) Vergleichsbeispiel:

### Herstellung einer nicht-wässrigen Dispersion aus anionisch hydrophilierter, nicht querverzweigter, aliphatischer Polyesterpolyurethan-Dispersion (Dispergiermedium: 1,4-Butandiol)

In einer Rührapparatur mit Destillationsaufsatz werden 500 g 1,4-Butandiol bei Raumtemperatur vorgelegt. Unter Rühren werden 125 g der Dispersion Impranil^{®} DLN innerhalb von 30 Minuten zugetropft. Dabei bilden sich Gelpartikel in der Mischung. Es wird 5 Stunden bei Raumtemperatur nachgerührt. Dann wird evakuiert auf ca. 100 mbar bei 75°C und das Wasser wird über den Destillationsaufsatz während ca. 3 Stunden abdestilliert. Der Druck wird dabei weiter reduziert bis 1 mbar. Es entsteht eine gelartige, inhomogene Mischung.

### 3) Vergleichsbeispiel:

### Herstellung einer nicht-wässrigen Dispersion aus nicht-ionisch hydrophilierter, nicht querverzweigter, aliphatischer Polyesterpolyurethan-Dispersion (Dispergiermedium: 1,4-Butandiol)

In einer Rührapparatur mit Destillationsaufsatz werden 500 g 1,4-Butandiol bei Raumtemperatur vorgelegt. Unter Rühren werden innerhalb von 40 Minuten 125 g der Dispersion der Dispersion Bayhydur^{®} VP LS 2240 zugetropft. Dann wird evakuiert auf ca. 100 mbar bei 75°C und das Wasser wird über den Destillationsaufsatz während ca. 3 Stunden abdestilliert. Der Druck wird dabei weiter reduziert bis 1 mbar. Dabei bilden sich Klumpen, die sich bei Ausschalten der Rührmotors auf dem Gefäßboden absetzen. Eine stabile Dispersion entsteht nicht.

### 4) Vergleichsbeispiel:

### Herstellung einer nicht-wässrigen Dispersion aus wässriger Nanoharnstoff-Dispersion aus Beispiel 1) durch Trocknen der Nanoharnstoff-Dispersion und anschließender Dispergierung (Dispergiermedium: 1,4-Butandiol, 10 Gew. % Nanopartikel)

In einer Rührapparatur wird 1 kg der Dispersion aus Beispiel 1) bei Raumtemperatur vorgelegt und es wird unter Rühren auf ca. 50 mbar evakuiert. Die Temperatur des Heizbades wird schrittweise bis 100°C erhöht, bis kein Wasser mehr überdestilliert wird. Anschließend wird bei gleicher Temperatur noch ca. 3 Stunden bei ca. 10 mbar weiter gerührt.

Von dem erhaltenen weißen Feststoff werden 50 g entnommen und in einer weiteren Rührapparatur unter starkem Rühren zu 450 g 1,4-Butandiol gegeben. Es bildet sich auch nach 2 Stunden Rühren bei Raumtemperatur und anschließender Erhöhung bis 120°C (3 Stunden) keine gleichförmige Durchmischung. Nach Abkühlen und Ausschalten der Rührmotors setzt sich der weiße Feststoff ab.

### 5) Vergleichsbeispiel:

### Herstellung einer nicht-wässrigen Dispersion aus wässriger Nanoharnstoff-Dispersion aus Beispiel 1) durch Trocknen der Nanoharnstoff-Dispersion unter Gefriertrocknung und anschließender Dispergierung (Dispergiermedium: 1,4-Butandiol, 10 Gew. % Nanopartikel)

Es wurde so vorgegangen, wie in Beispiel 4 beschriebenen, jedoch wurde Dispersion aus Beispiel 1) in einem 2 Liter-Rundkolben in einem Kältebad eingefroren und an eine Gefriertrocknungsanlage angebracht.

Von dem erhaltenen weißen Feststoff werden 50 g entnommen und in einer weiteren Rührapparatur unter starkem Rühren zu 450 g 1,4-Butandiol gegeben. Es bildet sich auch nach 2 Stunden Rühren bei Raumtemperatur und anschließender Erhöhung bis 120°C (3 Stunden) keine gleichförmige Durchmischung. Nach Abkühlen und Ausschalten der Rührmotors setzt sich der weiße Feststoff ab.

### 6) Erfindungsgemäß:

### Herstellung einer nicht-wässrigen Dispersion aus wässriger Nanoharnstoff-Dispersion aus Beispiel 1) (Dispergiermedium: 1,4-Butandiol, 9 Gew. % Nanopartikel)

Es wird so vorgegangen, wie in Beispiel 2) beschrieben, jedoch werden 128 g der Dispersion aus Beispiel 1, anstatt Impranil^{®} DLN zugesetzt.

Die erhaltene weiße nicht-wässrige Dispersion hatte nachfolgenden Eigenschaften:

| | |
|---|---|
| Partikelgröße (LKS): | 136 nm |
| Viskosität (Viskosimeter, 23°C): | 137 mPas |
| Wassergehalt (Karl-Fischer): | 0,076% |

### 7) Erfindungsgemäß:

### Herstellung einer nicht-wässrigen Dispersion aus wässriger Nanoharnstoff-Dispersion aus Beispiel 1) (Dispergiermedium: 1,4-Butandiol, 20 Gew.% Nanopartikel)

Es wird so vorgegangen, wie in Beispiel 2) beschrieben, jedoch werden 320 g der Dispersion aus Beispiel 1 anstatt Impranil^{®} DLN zugesetzt.

Die erhaltene weiße nicht-wässrige Dispersion hatte nachfolgenden Eigenschaften:

| | |
|---|---|
| Partikelgröße (LKS): | 112 nm |
| Viskosität (Viskosimeter, 23°C): | 310 mPas |
| Wassergehalt (Karl-Fischer): | 0,046% |

### 8) Erfindungsgemäß:

### Herstellung einer nicht-wässrigen Dispersion aus wässriger Nanoharnstoff-Dispersion aus Beispiel 1) (Dispergiermedium: 1,4-Butandiol, 29 Gew.% Nanopartikel)

Es wird so vorgegangen, wie in Beispiel 2) beschrieben, jedoch werden 400 g an 1,4-Butandiol und 409 g der Dispersion aus Beispiel 1 anstatt Impranil^{®} DLN zugesetzt.

Die erhaltene weiße nicht-wässrige Dispersion hatte nachfolgenden Eigenschaften:

| | |
|---|---|
| Partikelgröße (LKS): | 136 nm |
| Viskosität (Viskosimeter, 23°C): | 741 mPas |
| Wassergehalt (Karl-Fischer): | 0,065% |

### 9) Erfindungsgemäß:

### Herstellung einer nicht-wässrigen Dispersion aus wässriger Nanoharnstoff-Dispersion aus Beispiel 1) (Dispergiermedium: Polyester-Polyol, 9 Gew.% Nanopartikel)

In einer Rührapparatur mit Destillationsaufsatz werden 1000 g eines Polyester-Diols auf Basis von Adipinsäure, Ethylenglycol und 1,4-Butandiol, (OH-Zahl 55 mg KOH, Säurezahl max. 1 mg KOH) bei 40°C vorgelegt. Unter Rühren werden innerhalb von 40 Minuten 256 g der Dispersion aus Beispiel 1) zugetropft. Dann wird evakuiert auf ca. 100 mbar bei 80°C und das Wasser wird über den Destillationsaufsatz während ca. 3 Stunden abdestilliert. Der Druck wird dabei weiter reduziert bis 1 mbar.

Es entsteht eine weiße, nicht-wässrige Dispersion, die sich beim Abkühlen auf Raumtemperatur verfestigt. Durch erhöhte Temperatur kann die Dispersion wieder verflüssigt werden.

| | |
|---|---|
| Wassergehalt (Karl-Fischer): | 0,04% |

### 10) Erfindungsgemäß:

### Herstellung einer nicht-wässrigen Dispersion aus wässriger Nanoharnstoff-Dispersion aus Beispiel 1) (Dispergiermedium: Polyether-Polyol, 9 Gew. % Nanopartikel)

In einer Rührapparatur mit Destillationsaufsatz werden 900 g eines Polyether-Polyols auf Basis von Glycerin, Polyethylenoxid und Polypropylenoxid (OH-Zahl: 35, mittlerer Funktionalität: 3) bei Raumtemperatur vorgelegt. Unter Rühren werden innerhalb von 70 Minuten 230 g der Dispersion aus Beispiel 1) zugetropft. Es wird 5 Stunden bei Raumtemperatur nachgerührt. Dann wird evakuiert auf ca. 100 mbar und das Wasser wird über den Destillationsaufsatz während ca. 3 Stunden abdestilliert. Danach wird das Vakuum reduziert bis ca. 1 mbar und einer Kesseltemperatur von ca. 50°C weitere 5 Stunden entwässert.

Es entstand eine weiße, nicht-wässrige Dispersion mit folgenden Eigenschaften:

| | |
|---|---|
| Viskosität (Haake Rotationsviskosimeter, 23°C) | 2100 mPas |
| Partikelgröße (Laserkorrelationsspektroskopie, LKS) | 647 nm |
| Wassergehalt (Karl-Fischer): | 0,02% |

### 11) Erfindungsgemäß:

### Herstellung einer nicht-wässrigen Dispersion aus wässriger Nanoharnstoff-Dispersion aus Beispiel 1) (Dispergiermedium: Isophorondiamin, 10 Gew.% Nanopartikel)

Es wird so vorgegangen, wie in Beispiel 6) beschrieben, jedoch werden anstatt 500 g Butandiol, 500 g Isophorondiamin zugesetzt.

Die erhaltene weiße nicht-wässrige Dispersion hatte nachfolgenden Eigenschaften:

| | |
|---|---|
| Partikelgröße (LKS): | 91 nm |
| Viskosität (Viskosimeter, 23°C): | < 50 mPas |
| Wassergehalt (Karl-Fischer): | 0,02% |

### 12) Erfindungsgemäß:

### Herstellung einer nicht-wässrigen Dispersion aus wässriger Nanoharnstoff-Dispersion aus Beispiel 1) (Dispergiermedium: Hydrochinon-bis (2-hydroxyethylether), 9 Gew. % Nanopartikel)

In einer Rührapparatur mit Destillationsaufsatz werden 300 g Hydrochinon-bis(2-hydroxyethylether) bei 100°C vorgelegt. Unter Rühren werden innerhalb von 40 Minuten 77 g der Dispersion aus Beispiel 1) zugetropft. Dann wird evakuiert auf ca. 50 mbar bei 100°C und das Wasser wird über den Destillationsaufsatz während ca. 3 Stunden abdestilliert. Die Temperatur wird dabei schrittweise erhöht auf 160°C.

Es wird eine nicht-wässrige Dispersion erhalten, die sich beim Abkühlen auf Raumtemperatur verfestigt. Durch erhöhte Temperatur kann die Dispersion wieder verflüssigt werden.

| | |
|---|---|
| Wassergehalt (Karl-Fischer): | 0,04% |

### 13) Erfindungsgemäß:

### Herstellung einer nicht-wässrigen Dispersion aus wässriger Nanoharnstoff-Dispersion aus Beispiel 1) (Dispergiermedium: 2-Butoxy-ethanol, 9 Gew. % Nanopartikel)

In einer Rührapparatur mit Destillationsaufsatz werden 900 g 2-Butoxy-ethanol bei 25°C vorgelegt. Unter Rühren werden innerhalb von 40 Minuten 256 g der Dispersion aus Beispiel 1) zugetropft. Dann wird evakuiert auf ca. 30 mbar bei 80°C und das Wasser wird über den Destillationsaufsatz während ca. 15 Stunden abdestilliert.

Die erhaltene weiße nicht-wässrige Dispersion hatte nachfolgenden Eigenschaften:

| | |
|---|---|
| Partikelgröße (LKS): | 93 nm |
| Viskosität (Viskosimeter, 23°C): | < 100 mPas |
| Wassergehalt (Karl-Fischer): | 0,032% |

## Patentansprüche

1. Nanoharnstoff-Dispersion A), enthaltend quervernetzte Nanoharnstoffpartikel a) und mindestens ein Dispergiermedium B), welches mindestens eine gegenüber Isocyanatgruppen reaktive Gruppe aufweist, wobei der Wasser-Anteil, bezogen auf die Dispersion A), 0 bis 5 Gew.% beträgt und die Nanoharnstoffpartikel a) durch Umsetzung hydrophilierter Polyisocyanate i) in einem wässrigen Medium unter Ausbildung einer wässrigen Nanoharnstoff-Dispersion A') erhalten werden.

2. Nanoharnstoff-Dispersion A) gemäß Anspruch 1, **dadurch gekennzeichnet, dass** mindestens ein Polyisocyanat der hydrophilierten Polyisocyanate i) eine nichtionisch hydrophilierende Struktureinheit aufweist.

3. Nanoharnstoff-Dispersion A) gemäß Anspruch 1, **dadurch gekennzeichnet, dass** die hydrophilierten Polyisocyanate i) nichtionisch hydrophilierte Polyisocyanate i) sind, die im statistischen Mittel 5 bis 70 Oxyethylengruppen pro Molekül aufweisen.

4. Nanoharnstoff-Dispersion A) gemäß Anspruch 1, **dadurch gekennzeichnet, dass** das Dispergiermedium B) ausgewählt ist aus der Gruppe der Diamine, Polyamine, Diole, Polyole oder Verbindungen, die sowohl Alkoholgruppen und primäre bzw. sekundäre Aminogruppen als gegenüber Isocyanatgruppen reaktive Gruppen enthalten.

5. Nanoharnstoff-Dispersion A) gemäß Anspruch 1, **dadurch gekennzeichnet, dass** das Dispergiermedium B) ein Polyesterpolyol, Polycarbonatdiol oder Polyetherpolyol ist.

6. Verfahren zur Herstellung der Nanoharnstoff Dispersion A) gemäß Anspruch 1, **dadurch gekennzeichnet, dass** in einem ersten Schritt eine wässrige Nanoharnstoff-Dispersion A') enthaltend quervernetzte Nanoharnstoffpartikel a), mit mindestens einem Dispergiermedium B), welches mindestens eine gegenüber Isocyanatgruppen reaktive Gruppen aufweist, vermischt wird und anschließend in einem zweiten Schritt das Wasser, gleichzeitig zum Mischvorgang oder im Anschluss an die vollständige Durchmischung, entfernt wird.

7. Verfahren gemäß Anspruch 6, **dadurch gekennzeichnet, dass** das Wasser destillativ unter Druckverminderung und/oder Temperaturerhöhung entfernt wird.

8. Verfahren gemäß Anspruch 6, **dadurch gekennzeichnet, dass** während der Entfernung des Wassers die Mischung weiter durchmischt wird.

9. Verfahren gemäß Anspruch 6 **dadurch gekennzeichnet, dass** das Dispergiermedium B) in einer Rührapparatur vorgelegt und unter intensivem Rühren die wässrige Nanoharnstoff-Dipsersion A') zugetropft wird, wobei die Dosierzeit eine Minute bis 10 Stunden beträgt und anschließend eine Stunde bis 10 Stunden nachgerührt wird, dann das Wasser aus der Dispersion durch Destillation entfernt und die Dispersion unter Druckverminderung getrocknet wird.

10. Verwendung der Nanoharnstoff-Dispersion A) gemäß Anspruch 1 zur Herstellung von Additiven, Bindemittel oder Hilfs- oder Zusatzstoffen.

11. Additive, Bindemittel oder Hilfs- oder Zusatzstoffe enthaltend die Nanoharnstoff-Dispersion A) gemäß Anspruch 1.

## Claims

1. Nanourea dispersion A) comprising crosslinked nanourea particles a) and at least one dispersing medium B) which has at least one group reactive towards isocyanate groups, the water fraction, based on dispersion A), being 0% to 5% by weight and the nanourea particles a) being obtained by reacting hydrophilicized polyisocyanates i) in an aqueous medium to form an aqueous nanourea dispersion A').

2. Nanourea dispersion A) according to Claim 1, **characterized in that** at least one polyisocyanate of the hydrophilicized polyisocyanates i) contains a nonionically hydrophilicizing structural unit.

3. Nanourea dispersion A) according to Claim 1, **characterized in that** the hydrophilicized polyisocyanates i) are nonionically hydrophilicized polyisocyanates i) which contain on average 5 to 70 oxyethylene groups per molecule.

4. Nanourea dispersion A) according to Claim 1, **characterized in that** the dispersing medium B) is selected from the group consisting of diamines, polyamines, diols, polyols or compounds which contain not only alcohol groups and primary and/or secondary amino groups but also groups reactive towards isocyanate groups.

5. Nanourea dispersion A) according to Claim 1, **characterized in that** the dispersing medium B) is a polyesterpolyol, polycarbonatediol or polyetherpolyol.

6. Process for preparing the nanourea dispersion A) according to Claim 1, **characterized in that** in a first step an aqueous nanourea dispersion A') comprising crosslinked nanourea particles a) is mixed with at least one dispersing medium B) which has at least one group reactive towards isocyanate groups, and subsequently in a second step the water is removed, simultaneously with the mixing operation or subsequent to complete mixing.

7. Process according to Claim 6, **characterized in that** the water is removed by distillation with a pressure reduction and/or temperature increase.

8. Process according to Claim 6, **characterized in that** the mixture continues being mixed during the removal of the water.

9. Process according to Claim 6, **characterized in that** the dispersing medium B) is introduced into a stirring apparatus and, with intense stirring, the aqueous nanourea dispersion A') is added dropwise, the metering time being one minute to 10 hours, and subsequently the system is stirred for one hour to 10 hours, then the water is removed from the dispersion by distillation and the dispersion is dried with a reduction in pressure.

10. Use of the nanourea dispersion A) according to Claim 1 for preparing additives, binders or auxiliaries or adjuvants.

11. Additives, binders or auxiliaries or adjuvants comprising the nanourea dispersion A) according to Claim 1.

## Revendications

1. Dispersion de nano-urées A), contenant des particules de nano-urées à réticulation transversale a) et au moins un agent de dispersion B), qui présente au moins un groupe réactif vis-à-vis de groupes isocyanate, dans lequel la fraction d'eau, rapportée à la dispersion A), vaut 0 à 5 % en poids, et les particules de nano-urées a) sont obtenues par conversion de polyisocyanates hydrophilisés i) dans un milieu aqueux avec formation d'une dispersion aqueuse de nano-urées A').

2. Dispersion de nano-urées A) selon la revendication 1, **caractérisée en ce qu'**au moins un polyisocyanate des polyisocyanates hydrophilisés i) présente une unité de structure non ioniquement hydrophilisante.

3. Dispersion de nano-urées A) selon la revendication 1, **caractérisée en ce que** les polyisocyanates hydrophilisés i) sont des polyisocyanates non ioniquement hydrophilisés i), qui présentent en moyenne statistique 5 à 70 groupes oxyéthylène par molécule.

4. Dispersion de nano-urées A) selon la revendication 1, **caractérisée en ce que** l'agent de dispersion B) est sélectionné dans le groupe comprenant les diamines, les polyamines, les diols, les polyols ou des composés, qui contiennent aussi bien des groupes alcool et des groupes aminés primaires ou secondaires que des groupes réactifs vis-à-vis de groupes isocyanate.

5. Dispersion de nano-urées A) selon la revendication 1, **caractérisée en ce que** l'agent de dispersion B) est un polyol de polyester, un diol polycarbonate ou un polyol de polyéther.

6. Procédé de fabrication de la dispersion de nano-urées A) selon la revendication 1, **caractérisé en ce que**, dans une première étape, on mélange une dispersion aqueuse de nano-urées A') contenant des particules de nano-urées à réticulation transversale a), avec au moins un agent de dispersion B), qui présente au moins un groupe réactif vis-à-vis de groupes isocyanate, et ensuite, dans une deuxième étape, on élimine l'eau simultanément à l'opération de mélange ou à la suite du mélange intime total.

7. Procédé selon la revendication 6, **caractérisé en ce que** l'on élimine l'eau par distillation par diminution de la pression et/ou par augmentation de la température.

8. Procédé selon la revendication 6, **caractérisé en ce que** l'on continue à mélanger intimement le mélange pendant l'élimination de l'eau.

9. Procédé selon la revendication 6, **caractérisé en ce que** l'on présente l'agent de dispersion B) dans un appareil agitateur et on y ajoute goutte à goutte la dispersion aqueuse de nano-urées A') sous agitation intense, le temps de dosage valant une minute à 10 heures, et ensuite on poursuit l'agitation pendant une heure à 10 heures, puis on élimine l'eau hors de la dispersion par distillation et on sèche la dispersion par diminution de la pression.

10. Utilisation de la dispersion de nano-urées A) selon la revendication 1 pour la fabrication d'additifs, de liants ou d'agents accessoires ou d'adjuvants.

11. Additifs, liants ou agents accessoires ou adjuvants contenant la dispersion de nano-urées A) selon la revendication 1.
